# EUROPÄISCHE PATENTSCHRIFT

(11) **EP 1 321 320 B1**
(45) Veröffentlichungstag und Bekanntmachung des Hinweises auf die Patenterteilung: **21.02.2007**
(21) Anmeldenummer: 02028176.2
(22) Anmeldetag: 19.12.2002
(51) Int. Cl.: B60G 17/052, B60G 17/015

(54) **Luftfederungsanlage und Vorrichtung zum Sensieren von Drücken**
Air spring installation and device for sensing pressures
Installation de ressort pneumatique et dispositif de détection de pression

(30) Priorität: 21.12.2001 DE 10163379
(43) Veröffentlichungstag der Anmeldung: 25.06.2003
(73) Patentinhaber: KNORR-BREMSE SYSTEME FÜR NUTZFAHRZEUGE GMBH, 80809 München (DE)
(72) Erfinder: Geiger, Winfried, 75417 Mühlacker (DE); Fecht, Guenther, 71691 Freiburg (DE); Karthäuser, Klaus, 71723 Grossbottwar (DE)
(74) Vertreter: Mattusch, Gundula

(56) Entgegenhaltungen:
- GB-A- 2 344 323
- US-A- 4 484 784
- US-A- 4 655 505
- US-A- 5 794 924
- US-A1- 2001 004 443
- US-A1- 2001 017 449
- US-B1- 6 173 974
- PATENT ABSTRACTS OF JAPAN Bd. 0180, Nr. 41 (M-1546), 21. Januar 1994 (1994-01-21) & JP 5 270238 A (TOYOTA MOTOR CORP), 19. Oktober 1993 (1993-10-19)

## Beschreibung

Die Erfindung betrifft eine Luftfederungsanlage nach dem Oberbegriff des Anspruchs 1. Weiterhin betrifft die Erfindung eine Vorrichtung zum Sensieren von Drücken nach dem Oberbegriff des Anspruchs 6.

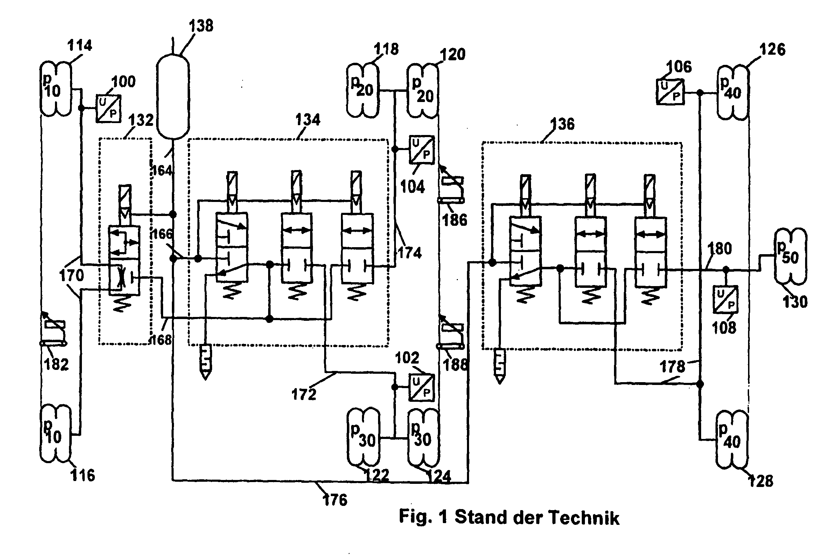

In Figur 1 ist eine bekannte Luftfederungsanlage für einen Lastkraftwagen dargestellt. Die dargestellte Luftfederungsanlage weist zwei der Vorderachse des Lastkraftwagens zugeordnete Bälge 114, 116 auf, die über pneumatische Leitungen 170, eine hier im Detail nicht näher interessierende erste Ventilanordnung 132, eine pneumatische Leitung 168, eine hier ebenfalls im Detail nicht näher interessierende zweite Ventilanordnung 134 und pneumatische Leitungen 166, 164 mit einer Druckquelle 138 verbindbar sind, um den in den Bälgen 114, 116 herrschenden Druck p₁₀ zu erhöhen. Weiterhin können die Bälge 114, 116 über die pneumatischen Leitungen 170, die erste Ventilanordnung 132, die pneumatische Leitung 168 und die zweite Ventilanordnung 134 mit einer Drucksenke, beispielsweise dem Umgebungsdruck, verbunden werden, um den Druck p₁₀ in den Bälgen 114, 116 zu verringern. In der dargestellten Ruhestellung der ersten Ventilanordnung 132 sind die Bälge 114, 116 über die pneumatischen Leitungen 170 verbunden, so dass der Druck p₁₀ in den Bälgen 114, 116 nur von auf die Bälge 114, 116 wirkenden Kräften verändert wird. Den Bälgen 114, 116 der Vorderachse des Lastkraftwagens ist ferner ein hier nicht näher interessierender Niveaudetektor 182 zugeordnet.

Die in Figur 1 dargestellte Luftfederungsanlage weist weiterhin zwei Bälge 118, 120 auf, die der rechten Triebachse des Lastkraftwagens zugeordnet sind. Die Bälge 118, 120 sind über die pneumatische Leitung 174, die zweite Ventilanordnung 134 und die pneumatischen Leitungen 166, 164 mit der Druckquelle 138 verbindbar, um den Druck p₂₀ in den Bälgen 118, 120 zu erhöhen. Weiterhin sind die Bälge 118, 120 über die pneumatische Leitung 174 und die zweite Ventilanordnung 134 mit einer Drucksenke verbindbar, um den Druck p₂₀ in den Bälgen 118, 120 zu verringern. Der rechten Triebachse des Lastkraftwagens ist ferner ein hier nicht näher interessierender Niveaudetektor 186 zugeordnet.

Der linken Triebachse des Lastkraftwagens sind zwei Bälge 122, 124 zugeordnet. Diese Bälge 122, 124 sind über eine pneumatische Leitung 172, die zweite Ventilanordnung 134 und die pneumatischen Leitungen 166, 164 mit der Druckquelle 138 verbindbar, um den Druck p₃₀ in den Bälgen 122, 124 zu erhöhen. Weiterhin sind die Bälge 122, 124 über die pneumatische Leitung 172 und die zweite Ventilanordnung 134 mit einer Drucksenke verbindbar, um den Druck p₃₀ in den Bälgen 122, 124 zu verringern. Den Bälgen 122, 124 ist ferner ein hier nicht näher interessierender Niveaudetektor 188 zugeordnet.

In der dargestellten Ruhestellung der zweiten Ventilanordnung 134 sind sowohl die pneumatische Leitung 172 als auch die pneumatische Leitung 174 verschlossen, so dass der Druck in den Bälgen 118, 120, 122, 124 nur durch auf die Bälge 118, 120, 122, 124 wirkende Kräfte verändert wird.

Zwei Bälge 126, 128 sind der Liftachse des Lastkraftwagens zugeordnet. Diese Bälge 126, 128 sind über eine pneumatische Leitung 178, eine dritte hier im Detail nicht näher interessierende Ventilanordnung 136 und pneumatische Leitungen 176, 164 mit der Druckquelle 138 verbindbar, um den Druck p₄₀ in den Bälgen 126, 128 zu erhöhen. Die Bälge 126, 128 sind über die pneumatische Leitung 178 und die dritte Ventilanordnung 136 weiterhin mit einer Drucksenke verbindbar, um den Druck p₄₀ in den Bälgen 126, 128 zu verringern. In der dargestellten Ruhestellung der dritten Ventilanordnung 136 ist die pneumatische Leitung 178 verschlossen, so dass der Druck p₄₀ in den Bälgen 126, 128 lediglich von auf die Bälge 126, 128 wirkenden Kräften verändert wird.

Schließlich weist die in Figur 1 dargestellte Luftfederungsanlage einen Hubbalg 130 auf, der über eine pneumatische Leitung 180, die dritte Ventilanordnung 136 und pneumatische Leitungen 176, 164 mit der Druckquelle 138 verbindbar ist, um den Druck p₅₀ in dem Hubbalg 130 zu erhöhen. Um den Druck p₅₀ in dem Hubbalg 130 zu verringern, ist der Hubbalg 130 über die pneumatische Leitung 180 und die dritte Ventilanordnung 136 mit einer Drucksenke verbindbar.

Beispielsweise um die Achslast, die Radlast und/oder die Achslastverteilung zu bestimmen, ist es erforderlich, die in den Bälgen 114 - 130 herrschenden Drücke p₁₀ - p₅₀ zu erfassen. Zu diesem Zweck weist die in Figur 1 dargestellte bekannte Luftfederungsanlage fünf Drucksensoren 100 - 108 auf, wobei der Drucksensor 100 den Druck p₁₀ in den der Vorderachse zugeordneten Bälgen 114, 116, der Drucksensor 104 den Druck p₂₀ in den der rechten Triebachse zugeordneten Bälgen 118, 120, der Drucksensor 102 den Druck p₃₀ in den der linken Triebachse zugeordneten Bälgen 122, 124, der Drucksensor 106 den Druck p₄₀ in den der Liftachse zugeordneten Bälgen 126, 128 und der Drucksensor 108 den Druck p₅₀ in dem Hubbalg 130 sensiert beziehungsweise erfasst. Die große Anzahl von Drucksensoren 100 - 108 verursacht jedoch hohe Kosten und einen erheblichen elektrischen Verdrahtungsaufwand.

Weiterhin offenbart die US-A-2001/017449 eine Luftfederungsanlage mit den Merkmalen des Oberbegriffs des Anspruchs 1 und eine Vorrichtung mit den Merkmalen des Oberbegriffs des Anspruchs 6. Das aus der der US-A-2001/017449 bekannte Federungssystem weist ein Leitungssystem mit einer zentralen Zu- und Abfuhrleitung (Versorgungsleitung) auf, in der ein Drucksensor vorgesehen ist. Dabei sind Ventile so angeordnet, dass vorgegebene beziehungsweise vorgebbare Systemteile beziehungsweise Systembereiche gesondert mit der Zu- und Abfuhrleitung verbindbar sind. Wenn die Druckmessung entsprechend der Lehre der US-A-2001/017449 über die Versorgungsleitungen durchgeführt wird, die einen vergleichsweise großen Querschnitt aufweisen müssen, tritt das Problem auf, dass es bei der Durchführung der Druckmessungen zu unerwünscht großen Luftverlusten kommt, so dass die Füllmenge der Bälge und damit verbunden die Niveaulage des Fahrzeugs in unerwünschter Weise beeinflusst wird. Die großen Luft- beziehungsweise Druckverluste sind dabei insbesondere durch das vergleichsweise große Volumen der Versorgungsleitungen bedingt.

Ein diesbezüglich vergleichbares System ist auch den "Patent Abstracts of Japan Bd. 0180, Nr. 41 (M-1546), 21. Januar 1994" bekannt.

Beispielsweise ausgehend von der Lehre der US-A-2001/017449 stellt sich dem Fachmann somit die Aufgabe, eine durch Druckmessungen verursachte unerwünschte Niveaulagenänderung des Fahrzeugs zu vermeiden.

Diese Aufgabe wird durch die Merkmale der unabhängigen Ansprüche gelöst.

Vorteilhafte Weiterbildungen und Ausgestaltungen der Erfindung ergeben sich aus den abhängigen Ansprüchen.

Bei dem Luftfederungssystem gemäß Anspruch 1 sowie bei der Vorrichtung gemäß Anspruch 6 ist wesentlich, dass zusätzlich zu den in jedem Fall erforderlichen pneumatischen Versorgungsleitungen mit vergleichsweise großem Querschnitt pneumatische Messleitungen mit einem kleineren Querschnitt vorgesehen werden. Aufgrund des kleineren Querschnitts der pneumatischen Messleitungen sind die durch die Druckmessungen bedingten Luftverluste deutlich geringer als beim Stand der Technik und unerwünschte Niveaulagenänderungen des Fahrzeugs können zumindest deutlich reduziert werden.

Bei bevorzugten Ausführungsformen ist vorgesehen, dass alle interessierenden Drücke dem Drucksensor über die Drucksensierventilanordnung zugeführt werden können, so dass insgesamt nur ein einziger Drucksensor erforderlich ist, unabhängig von der jeweiligen Fahrzeugkonfiguration.

Eine vorteilhafte Weiterbildung der erfindungsgemäßen Luftfederungsanlage sieht vor, dass die Drucksensierventilanordnung eine Mehrzahl von 2/2-Ventilen aufweist, von denen jeweils ein Anschluss mit dem Drucksensor in Verbindung steht, während der jeweils andere Anschluss mit zumindest einem der Bälge in Verbindung steht. Die mit dem Drucksensor in Verbindung stehenden Anschlüsse der 2/2-Ventile können beispielsweise über eine sekundärseitig vorgesehene Verbindungsbohrung mit dem Drucksensor verbunden sein.

Bei bevorzugten Ausführungsformen der erfindungsgemäßen Luftfederungsanlage ist vorgesehen, dass pneumatische Messleitungen vorgesehen sind, die zumindest einige der Bälge mit der Drucksensierventilanordnung verbinden. Die pneumatischen Messleitungen können dabei einen Querschnitt aufweisen, der im Vergleich zu den Querschnitten der üblicherweise verwendeten pneumatischen Leitungen klein ist.

Weiterhin wird es im Zusammenhang mit der erfindungsgemäßen Luftfederungsanlage als vorteilhaft erachtet, dass zumindest einige der 2/2-Ventile in ihrer Ruhestellung geschlossen und in ihrer Arbeitsstellung geöffnet sind. Bei den 2/2-Ventilen kann es sich insbesondere um Magnetventile handeln, deren Ruhestellung bei fehlender Ansteuerung durch eine Federkraft vorgegeben wird.

Eine vorteilhafte Weiterbildung der erfindungsgemäßen Luftfederungsanlage sieht vor, dass die Drucksensierventilanordnung ein Ventil aufweist, über das der Drucksensor mit einer Drucksenke verbindbar ist. Die Drucksenke kann im einfachsten Fall durch den Umgebungsdruck gebildet sein. Ein Drucklosschalten des Drucksensors zwischen den einzelnen Messungen ermöglicht es, den Drucksensor als Absolutdrucksensor zu betreiben. Weiterhin kann das Drucklosschalten des Drucksensors zu dessen Kalibrierung eingesetzt werden. Wird der Drucksensor zwischen den einzelnen Messungen nicht drucklos geschaltet, so kann er als Relativdrucksensor betrieben werden. In Fällen, in denen ausschließlich eine Relativdruckmessung erwünscht ist, kann das Ventil, über das der Drucksensor mit der Drucksenke verbindbar ist, gegebenenfalls entfallen.

Bei der erfindungsgemäßen Luftfederungsanlage kann weiterhin vorgesehen sein, dass sie eine Steuerungseinrichtung aufweist, die die Drucksensierventilanordnung ansteuert, um den Drucksensor selektiv mit zumindest einigen der Bälge zu verbinden. Bei der Steuerungseinrichtung kann es sich entweder um eine separate Steuerungseinrichtung oder um die Steuerungseinrichtung handeln, die zur Steuerung der gesamten Luftfederungsanlage eingesetzt wird.

Die erfindungsgemäße Vorrichtung zum Sensieren von Drücken ermöglicht es, die Drücke in unterschiedlichen Systemen und/oder Systemkomponenten mit nur einem Drucksensor zu erfassen, wobei die Kombination von nur einem Drucksensor und einer Drucksensierventilanordnung in vielen Fällen deutlich geringere Kosten verursacht als die Verwendung einer entsprechenden Anzahl von Drucksensoren.

Bei bevorzugten Ausführungsformen der erfindungsgemäßen Vorrichtung ist vorgesehen, dass die Drucksensierventil anordnung eine Mehrzahl von 2/2-Ventilen aufweist, von denen jeweils ein Anschluss mit dem Drucksensor in Verbindung steht, während der jeweils andere Anschluss dazu vorgesehen ist, mit einem System oder einer Systemkomponente verbunden zu werden. Auch in diesem Fall kann die Verbindung zwischen dem Drucksensor und den jeweiligen Anschlüssen der 2/2-Ventile über eine sekundärseitige Verbindungsbohrung erfolgen.

Bei der erfindungsgemäßen Vorrichtung ist vorzugsweise weiterhin vorgesehen, dass zumindest einige der 2/2-Ventile in ihrer Ruhestellung geschlossen und in ihrer Arbeitsstellung geöffnet sind. Auch in diesem Fall kann es sich bei den 2/2-Ventilen beispielsweise um Magnetventile handeln, deren Ruhestellung bei fehlender Ansteuerung durch eine Federkraft vorgegeben wird. Selbstverständlich können gegebenenfalls auch andere Ventiltypen verwendet werden, beispielsweise Piezoventile.

Auch bei der erfindungsgemäßen Vorrichtung kann vorgesehen sein, dass die Drucksensierventilanordnung ein Ventil aufweist, über das der Drucksensor mit einer Drucksenke verbindbar ist. Auch in diesem Fall kann die Drucksenke durch den Umgebungsdruck gebildet sein. Diesbezüglich wird auf die entsprechenden Ausführungen zur Absolut- beziehungsweise Relativdruckmessung im Zusammenhang mit der erfindungsgemäßen Luftfederungsanlage verwiesen.

Bei der erfindungsgemäßen Vorrichtung kann weiterhin vorgesehen sein, dass sie eine Steuerungseinrichtung aufweist, die die Ventilanordnung ansteuert, um den Drucksensor selektiv mit den unterschiedlichen Systemen und/oder Systemkomponenten zu verbinden. Selbstverständlich sind ebenfalls Ausführungsformen denkbar, bei denen die Ansteuerung der Drucksensierventilanordnung von einer separaten Steuerungseinrichtung durchgeführt wird.

Der Erfindung liegt die Erkenntnis zugrunde, dass durch den Einsatz einer Drucksensierventilanordnung nur noch ein Drucksensor benötigt wird, um eine Vielzahl von Drücken zu messen.

Die Erfindung wird nun unter Bezugnahme auf die beigefügten Zeichnungen anhand bevorzugter Ausführungsformen beispielhaft erläutert.

Es zeigen:
- Figur 1: eine für einen Lastkraftwagen geeignete Luftfederungsanlage gemäß dem Stand der Technik;
- Figur 2: eine Ausführungsform der erfindungsgemäßen Luftfederungsanlage, die ebenfalls bei einem Lastkraftwagen eingesetzt werden kann; und
- Figur 3: eine Ausführungsform der erfindungsgemäßen Vorrichtung zum Sensieren von Drücken.

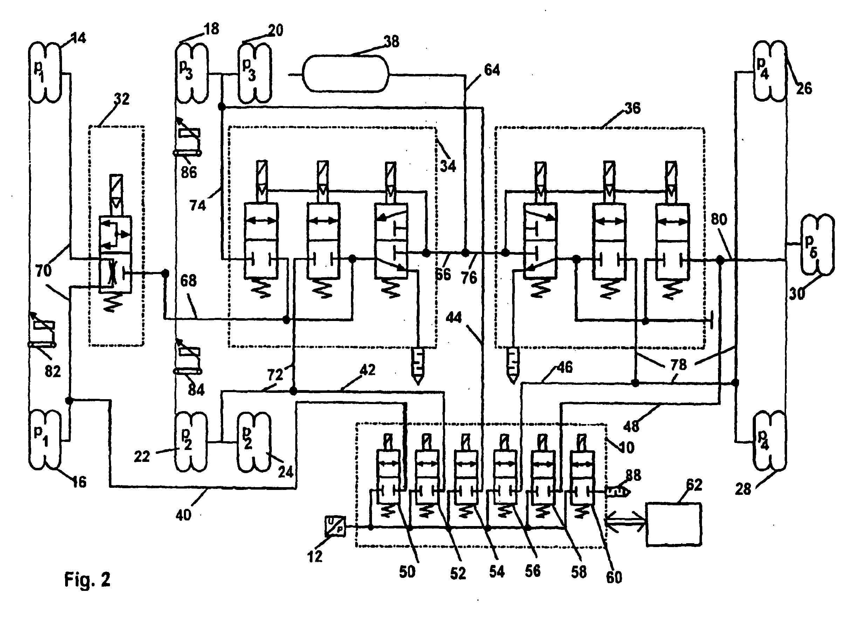

Die in Figur 2 dargestellte Ausführungsform der erfindungsgemäßen Luftfederungsanlage weist zwei der Vorderachse des Lastkraftwagens zugeordnete Bälge 14, 16 auf. Den Bälgen 14, 16 ist ein hier nicht näher interessierender Niveaudetektor 82 zugeordnet. Die Bälge 14, 16 sind über pneumatische Leitungen 70, eine erste hier im Detail nicht näher interessierende Ventilanordnung 32, eine pneumatische Leitung 68, eine zweite hier ebenfalls im Detail nicht näher interessierende Ventilanordnung 34 und pneumatische Leitungen 66, 64 mit einer Druckquelle 38 verbindbar, um den Druck p₁ in den Bälgen 14, 16 zu erhöhen. Weiterhin sind die Bälge 14, 16 über die pneumatischen Leitungen 70, die erste Ventilanordnung 32, die pneumatische Leitung 68 und die zweite Ventilanordnung 34 mit einer Drucksenke verbindbar, um den Druck p₁ in den Bälgen 14, 16 zu verringern. In der dargestellten Ruhestellung der ersten Ventilanordnung 32 sind die pneumatischen Leitungen 70 unter Abdichtung verbunden, so dass der Druck p₁ in den Bälgen 14, 16 nur durch auf die Bälge 14, 16 wirkende Kräfte verändert wird.

Zwei Bälge 18, 20 sind der rechten Triebachse des Lastkraftwagens zugeordnet. Dieser rechten Triebachse ist weiterhin ein hier nicht näher interessierender Niveaudetektor 86 zugeordnet. Die Bälge 18, 20 sind über eine pneumatische Leitung 74, die zweite Ventilanordnung 34 und pneumatische Leitungen 66, 64 mit der Druckquelle 38 verbindbar, um den Druck p₃ in den Bälgen 18, 20 zu erhöhen. Weiterhin sind die Bälge 18, 20 über die pneumatische Leitung 74 und die zweite Ventilanordnung 34 mit einer Drucksenke verbindbar, um den Druck p₃ in den Bälgen 18, 20 zu verringern. In der dargestellten Ruhestellung der zweiten Ventilanordnung 34 ist die pneumatische Leitung 74 verschlossen, so dass sich der Druck p₃ in den Bälgen 18, 20 nur durch auf die Bälge 18, 20 wirkende Kräfte verändert.

Der linken Triebachse des Lastkraftwagens sind zwei Bälge 22, 24 zugeordnet. Ferner ist auch der linken Triebachse ein Niveaudetektor 84 zugeordnet. Die Bälge 22, 24 sind über eine pneumatische Leitung 72, die zweite Ventilanordnung 34 und pneumatische Leitungen 66, 64 mit der Druckquelle 38 verbindbar, um den Druck p₂ in den Bälgen 22, 24 zu erhöhen. Weiterhin sind die Bälge 22, 24 über die pneumatische Leitung 72 und die zweite Ventilanordnung 34 mit einer Drucksenke verbindbar, um den Druck p₂ in den Bälgen 22, 24 zu verringern. Bei der dargestellten Ruhestellung der zweiten Ventilanordnung 34 ist die pneumatische Leitung 72 verschlossen, so dass der Druck p₂ in den Bälgen 22, 24 nur durch auf die Bälge 22, 24 wirkende Kräfte verändert wird.

Zwei durch eine pneumatische Leitung fest verbundene Bälge 26, 28 sind einer Liftachse des Lastkraftwagens zugeordnet. Die Bälge 26, 28 sind über eine pneumatische Leitung 78, eine hier im Detail nicht näher interessierende dritte Ventilanordnung 36 und pneumatische Leitungen 76, 64 mit der Druckquelle 38 verbindbar, um den Druck p₄ in den Bälgen 26, 28 zu erhöhen. Weiterhin sind die Bälge 26, 28 über die pneumatische Leitung 78 und die dritte Ventilanordnung 36 mit einer Drucksenke verbindbar, um den Druck p₄ in den Bälgen 26, 28 zu verringern. In der dargestellten Ruhestellung der dritten Ventilanordnung ist die pneumatische Leitung 78 verschlossen, so dass der Druck p₄ in den Bälgen 26, 28 nur durch auf die Bälge 26, 28 wirkende Kräfte verändert wird.

Schließlich weist die in Figur 2 dargestellte Luftfederungsanlage eine Hubbalg 30 auf, der über eine pneumatische Leitung 80, die dritte Ventilanordnung 36 und pneumatische Leitungen 76, 64 mit der Druckquelle 38 verbindbar ist, um den Druck p₅ in dem Hubbalg 30 zu erhöhen. Weiterhin ist der Hubbalg 30 über die pneumatische Leitung 80 und die dritte Ventilanordnung 36 mit einer Drucksenke verbindbar, um den Druck p₅ in dem Hubbalg 30 zu verringern. Bei der dargestellte Ruhestellung der dritten Ventilanordnung 36 ist die pneumatische Leitung 80 verschlossen, so dass der Druck p₅ in dem Hubbalg 30 nur durch auf den Hubbalg 30 wirkende Kräfte verändert wird.

Beispielsweise um die Achslasten, die Radlasten und die Achslastverteilung zu bestimmen, ist es erforderlich, die Drücke p₁ bis p₅ in den Bälgen 14 bis 30 zu bestimmen. Zu diesem Zweck weist die dargestellte Luftfederungsanlage eine Drucksensierventilanordnung 10 und einen einzigen Drucksensor 12 auf. Die Drucksensierventilanordnung 10 weist fünf 2/2-Magnetventile 50, 52, 54, 56, 58 auf, die in ihrer dargestellten Ruhestellung geschlossen sind. Der jeweils erste Anschluss der 2/2-Magnetventile 50 bis 58 steht über eine sekundärseitige Verbindungsbohrung mit dem Drucksensor 12 in Verbindung. Der zweite Anschluss des 2/2-Magnetventils 50 ist über eine pneumatische Messleitung 40 mit der pneumatischen Leitung 70 und somit mit den Bälgen 14, 16 verbunden. Der zweite Anschluss des 2/2-Magnetventils 52 ist über eine pneumatische Messleitung 42 mit der pneumatischen Leitung 72 und somit mit den Bälgen 22, 24 verbunden. Der zweite Anschluss des 2/2-Magnetventils 54 ist über eine pneumatische Messleitung 44 mit der pneumatischen Leitung 74 und somit mit den Bälgen 18, 20 verbunden. Der zweite Anschluss des 2/2-Magentventils 56 ist über eine pneumatische Messleitung 46 mit der pneumatischen Leitung 78 und somit mit den Bälgen 26, 28 verbunden. Schließlich ist der zweite Anschluss des 2/2-Magnetventils 58 über eine pneumatische Messleitung 48 mit der pneumatischen Leitung 80 und somit mit dem Hubbalg 30 verbunden. Eine nur schematisch angedeutete Steuerungseinrichtung 62 steuert die 2/2-Magnetventile der Drucksensierventilanordnung 10 vorzugsweise derart an, dass immer nur eines der 2/2-Magnetventile 50 bis 58 öffnet, so dass dem Drucksensor 12 jeder der Drücke p₁, p₂, p₃, p₄ und p₅ selektiv zugeführt werden kann. Bei der dargestellten Ausführungsform umfasst die Drucksensierventilanordnung 10 ein weiteres 2/2-Magnetventil 60, dessen erster Anschluss ebenfalls mit dem Drucksensor 12 in Verbindung steht. Der zweite Anschluss des 2/2-Magnetventils 60 steht mit einer Drucksenke 88 in Verbindung. Die Drucksenke 88 kann im einfachsten Fall durch den Umgebungsdruck gebildet sein und dient dazu, den Drucksensor 12 gegebenenfalls drucklos zu schalten. Wenn der Drucksensor 12 zwischen den einzelnen Messungen durch das weitere 2/2-Magnetventil 60 drucklos geschaltet wird, wird der Drucksensor 12 als Absolutdrucksensor betrieben. Wenn der Drucksensor 12 zwischen den einzelnen Messungen nicht durch das weitere 2/2-Magnetventil 60 drucklos geschaltet wird, wird der Drucksensor 12 als Relativdrucksensor betrieben. Sofern ausschließlich ein Betrieb als Relativdrucksensor erwünscht ist, kann das weitere 2/2-Magnetvetil 60 gegebenenfalls entfallen.

Durch den Einsatz der Drucksensierventilanordnung 10 ist es möglich, alle im Bereich der Luftfederungsanlage interessierenden Drücke p₁ bis p₅ mit nur einem Drucksensor 12 zu erfassen. Dabei kann das System gegebenenfalls derart erweitert werden, dass zum Beispiel weitere im Fahrzeug vorhandene Drucksensoren und/oder weitere im Fahrzeug interessierende Drücke auf die Drucksensierventilanordnung geschaltet werden. Die Abfrageprioritäten könnten beispielsweise in Verbindung mit einer CAN-Vernetzung und entsprechenden Regelalgorithmen festgelegt werden.

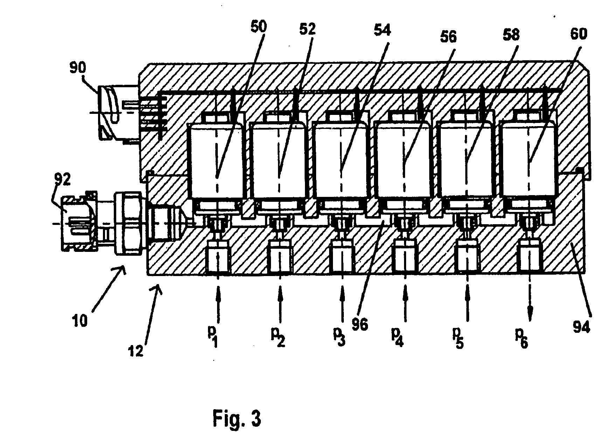

Figur 3 zeigt eine Ausführungsform der erfindungsgemäßen Vorrichtung zum Sensieren von Drücken. Die insgesamt mit 12 bezeichnete Drucksensierventilanordnung weist ein Gehäuse 94 auf, in dem sechs 2/2-Magnetventile 50, 52, 54, 56, 58, 60 vorgesehen sind. Der jeweils erste Anschluss der 2/2-Magnetventile 50 bis 60 steht über eine sekundärseitig vorgesehene Verbindungsbohrung 96 mit einem Drucksensor 10 in Verbindung, der an seinem Ausgang 92 eine den jeweiligen Druck kennzeichnende Spannung ausgibt. Die jeweils zweiten Anschlüsse der 2/2-Magnetventile 50 bis 58 sind dazu vorgesehen, über pneumatische Messleitungen mit unterschiedlichen Systemen und/oder Systemkomponenten verbunden zu werden, in denen Drücke p₁, p₂, P₃, p₄, p₅ zu erfassen sind. Der zweite Anschluss des 2/2-Magnetventils 60 ist dazu vorgesehen, mit einer einen Druck p₆ aufweisenden Drucksenke verbunden zu werden, bei der es sich beispielsweise um den Umgebungsdruck handeln kann. Somit kann der Drucksensor 10 über das 2/2-Magnetventil 60 zwischen allen oder einigen Messungen drucklos geschaltet werden. Die Drucksensierventilanordnung 12 weist weiterhin einen Steueranschluss 90 auf, an dem eine in Figur 3 nicht dargestellte Steuerungseinrichtung angeschlossen werden kann, um die 2/2-Magnetventile 50 bis 60 in geeigneter Weise anzusteuern. Diese Ansteuerung erfolgt vorzugsweise derart, dass immer nur eines der 2/2-Magnetventile 50 bis 60 öffnet, um den Drucksensor 10 mit einem der Drücke p₁ bis p₆ zu verbinden. Die in Figur 3 dargestellte Ausführungsform der erfindungsgemäßen Vorrichtung zum Sensieren von Drücken kann beispielsweise bei der Luftfederungsanlage gemäß Figur 2 eingesetzt werden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Luftfederungsanlage, insbesondere für einen Lastkraftwagen oder einen Bus, mit einer Mehrzahl von Bälgen (14-30), die über eine oder mehrere Ventilanordnungen (32, 34, 36) und pneumatische Versorgungsleitungen (64-80) selektiv mit zumindest einer Druckquelle (38) verbindbar sind, mit einem Drucksensor (12) und mit einer Drucksensierventilanordnung (10), die dazu vorgesehen ist, den Drucksensor (12) selektiv mit zumindest einigen der Bälge (14-30) zu verbinden **dadurch gekennzeichnet, dass** zusätzlich zu den pneumatischen Versorgungsleitungen (64-80) pneumatische Messleitungen (40-48) vorgesehen sind, die einen kleineren Querschnitt als die pneumatischen Versorgungsleitungen aufweisen und über die zumindest einige der Bälge (14-30) mit der Drucksensierventilanordnung (10) in Verbindung stehen.

2. Luftfederungsanlage nach Anspruch 1, **dadurch gekennzeichnet, dass** die Drucksensierventilanordnung (10) eine Mehrzahl von 2/2-Ventilen (50-58) aufweist, von denen jeweils ein Anschluss mit dem Drucksensor (12) in Verbindung steht, während der jeweils andere Anschluss mit zumindest einem der Bälge (14-30) in Verbindung steht.

3. Luftfederungsanlage nach Anspruch 2, **dadurch gekennzeichnet, dass** zumindest einige der 2/2-Ventile (50-58) in ihrer Ruhestellung geschlossen und in ihrer Arbeitsstellung geöffnet sind.

4. Luftfederungsanlage nach einem der vorhergehenden Ansprüche, **dadurch gekennzeichnet, dass** die Drucksensierventilanordnung (10) ein Ventil (60) aufweist, über das der Drucksensor (12) mit einer Drucksenke (88) verbindbar ist.

5. Luftfederungsanlage nach einem der vorhergehenden Ansprüche, **dadurch gekennzeichnet, dass** sie eine Steuerungseinrichtung (62) aufweist, die die Drucksensierventilanordnung (10) ansteuert, um den Drucksensor (12) selektiv mit zumindest einigen der Bälge (14-30) zu verbinden.

6. Vorrichtung zum Sensieren von Drücken (p₁-p₅), die in unterschiedlichen Systemen und/oder Systemkomponenten (14-30) einer Luftfederungsanlage, insbesondere für einen Lastkraftwagen oder einen Bus, herrschen, mit einem Drucksensor (12) und mit einer Drucksensierventilanordnung (10), die dazu vorgesehen ist, den Drucksensor (12) selektiv mit den unterschiedlichen Systemen und/oder Systemkomponenten (14-30) zu verbinden, **dadurch gekennzeichnet, dass** die Drucksensierventilanordnung (10) Anschlüsse für pneumatische Messleitungen (40-48) aufweist, die einen kleineren Querschnitt als pneumatischen Versorgungsleitungen (64-80) der Luftfederungsanlage aufweisen.

7. Vorrichtung nach Anspruch 6, **dadurch gekennzeichnet, dass** die Drucksensierventilanordnung (10) eine Mehrzahl von 2/2-Ventilen (50-58) aufweist, von denen jeweils ein Anschluss mit dem Drucksensor (12) in Verbindung steht, während der jeweils andere Anschluss dazu vorgesehen ist, mit einer der pneumatischen Messleitungen (40-48) verbunden zu werden.

8. Vorrichtung nach Anspruch 7, **dadurch gekennzeichnet, dass** zumindest einige der 2/2-Ventile (50-58) in ihrer Ruhestellung geschlossen und in ihrer Arbeitsstellung geöffnet sind.

9. Vorrichtung nach einem der Ansprüche 6 bis 8, **dadurch gekennzeichnet, dass** die Drucksensierventilanordnung (10) ein Ventil (60) aufweist, über das der Drucksensor mit einer Drucksenke (88) verbindbar ist.

10. Vorrichtung nach einem der Ansprüche 6 bis 9, **dadurch gekennzeichnet, dass** sie eine Steuerungseinrichtung (62) aufweist, die die Drucksensierventilanordnung (10) ansteuert, um den Drucksensor (12) selektiv mit den unterschiedlichen Systemen und/oder Systemkomponenten (14-30) zu verbinden.

## Claims

1. Pneumatic suspension system, in particular for a lorry or a bus, comprising a plurality of bellows units (14 - 30) adapted to be connected selectively via one or several valve modules (32, 34, 36) and pneumatic supply lines (64 - 80) to at least one pressure source (38), comprising a pressure sensor (12) and a pressure-sensing valve module (10) provided for connecting said pressure sensor (12) selectively to at least some of said bellows units (14-30), **characterised in that** pneumatic measuring lines (40 - 48) are provided in addition to said pneumatic supply lines (64 - 80), which present a cross-sectional area smaller than the cross-section of said pneumatic supply lines and which communicate via said at least some of said bellows units (14 - 30) with said pressure-sensing valve module (10).

2. Pneumatic suspension system according to Claim 1, **characterised in that** said pressure-sensing valve module (10) comprises a plurality of 2/2 valves (50 - 58) whereof one respective port communicates with said pressure sensor (12) whilst the respectively other port communicates with at least one of said bellows units (14-30).

3. Pneumatic suspension system according to Claim 2, **characterised in that** at least some of said 2/2 valves (50 - 58) are closed in their neutral position and opened in their active position.

4. Pneumatic suspension system according to any of the preceding Claims, **characterised in that** said pressure-sensing valve module (10) comprises a valve (60) via which said pressure sensor (12) can be connected to a pressure sink (88).

5. Pneumatic suspension system according to any of the preceding Claims, **characterised in that** it comprises a control means (62) controlling said pressure-sensing valve module (10) for connecting said pressure sensor (12) selectively to at least some of said bellows units (14 - 30).

6. Device for sensing pressures (p₁ - p₅) prevailing in different systems and/or system components (14 - 30) of a pneumatic suspension system, in particular for a lorry or a bus, comprising a pressure sensor (12) and a pressure-sensing valve module (10) provided for connecting said pressure sensor (12) selectively to said different systems and/or system components (14 - 30), **characterised in that** said pressure-sensing valve module (10) comprises ports for connection of pneumatic measuring lines (40 - 48) having a cross-sectional area smaller than the cross-section of said pneumatic supply lines (64 - 80) of the pneumatic suspension system.

7. Device according to Claim 6, **characterised in that** said pressure-sensing valve module (10) comprises a plurality of 2/2 valves (50 - 58) whereof one respective port communicates with said pressure sensor (12) whilst the respectively other port is provided for being connected to one of said pneumatic measuring lines (40 - 48).

8. Device according to Claim 7, **characterised in that** at least some of said 2/2 valves (50 - 58) are closed in their neutral position and opened in their active position.

9. Device according to any of the Claims 6 to 8, **characterised in that** said pressure-sensing valve module (10) comprises a valve (60) via which said pressure sensor can be connected to a pressure sink (88).

10. Device according to any of the Claims 6 to 9, **characterised in that** it comprises a control means (62) controlling said pressure-sensing valve module (10) for connecting said pressure sensor (12) selectively to said different systems and/or system components (14 - 30).

## Revendications

1. Système de suspension pneumatique, en particulier pour un camion ou un bus, comprenant a une pluralité de soufflets (14 - 30) aptes à être raccordé, de manière sélective, via un ou plusieurs unités à soupape (32, 34, 36) et des conduits d'alimentation pneumatique (64 - 80) à au moins une source de pression (38), comprenant un détecteur de pression (12) et une unité à soupape détectrice de pression (10) montée à connecter ledit détecteur de pression (12), de manière sélective, à au moins quelques-uns desdits soufflets (14-30), **caractérisé en ce que** des conduits de mesure pneumatique (40 - 48) sont pourvus, supplémentaires auxdits conduits d'alimentation pneumatique (64 - 80), qui présentent une aire de la section plus petite que la section transversale desdits conduits d'alimentation pneumatique et qui se trouvent en communication, via lesdits au moins quelques-uns desdits soufflets (14 - 30), avec ladite unité à soupape détectrice de pression (10).

2. Système de suspension pneumatique selon la revendication 1, **caractérisé en ce que** ladite unité à soupape détectrice de pression (10) comprend une pluralité de soupapes à 2/2 voies (50 - 58) dont un raccord respectif se trouve en communication avec ledit détecteur de pression (12) pendant que l'autre raccord respectif se trouve en communication avec au moins un desdits soufflets (14 - 30).

3. Système de suspension pneumatique selon la revendication 2, **caractérisé en ce qu'**au moins quelques-unes desdites soupapes à 2/2 voies (50 - 58) sont fermées en leur position neutre et sont ouvertes en leur position de service.

4. Système de suspension pneumatique selon une quelconque des revendications précédentes, **caractérisé en ce que** ladite unité à soupape détectrice de pression (10) comprend une soupape (60) via laquelle ledit détecteur de pression (12) est raccordable à un collecteur de pression (88).

5. Système de suspension pneumatique selon une quelconque des revendications précédentes, **caractérisé en ce qu'**il comprend un moyen de commande (62) commandant ladite unité à soupape détectrice de pression (10) à relier ledit détecteur de pression (12), de façon sélective, à au moins quelques-uns desdits soufflets (14 - 30).

6. Dispositif à détecteur des pressions (p₁ - p₅) régnant dans des divers systèmes et/ou composants de systèmes (14 - 30) d'un système de suspension pneumatique, en particulier pour un camion ou un bus, comprenant un détecteur de pression (12) et une unité à soupape détectrice de pression (10) montée afin de relier ledit détecteur de pression (12), de façon sélective, auxdits divers systèmes et/ou composants de systèmes (14 - 30), **caractérisé en ce que** ladite unité à soupape détectrice de pression (10) comprend des raccords pour la connexion des conduits de mesure pneumatique (40 - 48) ayant une aire de la section plus petite que la section transversale desdits conduits d'alimentation pneumatique (64 - 80) du système de suspension pneumatique.

7. Dispositif selon la revendication 6, **caractérisé en ce que** ladite unité à soupape détectrice de pression (10) comprend une pluralité de soupapes à 2/2 voies (50 - 58), dont un raccord respectif se trouve en communication avec ledit détecteur de pression (12), pendant que l'autre raccord respectif est formé à être relié à un desdits conduits de mesure pneumatique (40 - 48).

8. Dispositif selon la revendication 7, **caractérisé en ce qu'**au moins quelques-unes desdites soupapes à 2/2 voies (50 - 58) sont fermées en leur position neutre et sont ouvertes en leur position active.

9. Dispositif selon une quelconque des revendications 6 à 8, **caractérisé en ce que** ladite unité à soupape détectrice de pression (10) comprend une soupape (60), via laquelle ledit détecteur de pression est raccordable à un collecteur de pression (88).

10. Dispositif selon une quelconque des revendications 6 à 9, **caractérisé en ce qu'**il comprend un moyen de commande (62) commandant ladite unité à soupape détectrice de pression (10) afin de relier ledit détecteur de pression (12), de façon sélective, auxdits divers systèmes et/ou composants de systèmes (14 - 30).
